# FASCICULE DE BREVET EUROPEEN

(11) **EP 3 253 556 B1**
(45) Date de publication et mention de la délivrance du brevet: **08.04.2020**
(21) Numéro de dépôt: 16702178.1
(22) Date de dépôt: 07.01.2016
(51) Int. Cl.: B29C 51/10, B29C 51/14, B60R 13/08, B29C 70/42, B29C 70/44, B29C 43/02, B32B 5/02

(54) **PROCÉDÉ DE RÉALISATION D'UN PANNEAU D'HABILLAGE ET DE PROTECTION ACOUSTIQUE POUR VÉHICULE AUTOMOBILE**
VERFAHREN ZUR HERSTELLUNG EINER VERKLEIDUNG UND SCHALLSCHUTZTAFEL FÜR EIN KRAFTFAHRZEUG
METHOD FOR PRODUCING A TRIM AND SOUND PROTECTION PANEL FOR A MOTOR VEHICLE

(30) Priorité: 05.02.2015 FR 1550926; 19.03.2015 FR 1552275
(43) Date de publication de la demande: 13.12.2017
(73) Titulaire: TREVES Products, Services & Innovation, 75008 Paris (FR)
(72) Inventeur: BLOM, Christophe, 51100 Reims (FR); DREZET, David, 51400 Prosnes (FR); POTHIER, Marc, 51220 Hermonvilles (FR)
(74) Mandataire: Sayettat, Julien Christian
(86) Numéro de dépôt international: PCT/FR2016/050030
(87) Numéro de publication internationale: WO 2016/124830

(56) Documents cités:
- FR-A1- 2 941 885
- US-A1- 2011 287 124
- US-A1- 2013 309 464

## Description

L'invention concerne un procédé de réalisation d'un panneau d'habillage et de protection acoustique pour véhicule automobile et un panneau obtenu par un tel procédé.

Il est connu, notamment du document US-5 908 524, de mettre en œuvre un procédé de réalisation d'un panneau d'habillage et de protection acoustique pour véhicule automobile, ledit procédé comprenant les étapes suivantes :
- prévoir un moule de compression à chaud, ledit moule comprenant une matrice et un poinçon définissant une cavité de moulage, ledit poinçon ou ladite matrice présentant une face pourvue d'un grainage,
- disposer entre ladite matrice et ledit poinçon, en empilement successif, une couche de revêtement étanche et une couche perméable de structure et d'absorption acoustique apte à être moulée par compression à chaud, ladite couche de structure étant à base de fibres liées entre elles par un liant, ladite couche de revêtement étant tournée vers ladite face, lesdites couches étant à température permettant leur moulage,
- fermer ledit moule de manière à comprimer lesdites couches et appliquer simultanément un tirage sous vide ou du gaz sous pression de manière à plaquer ladite couche de revêtement contre ladite face pour réaliser son grainage,
- après découpe périphérique, démouler le panneau obtenu.

La mise en œuvre d'un tel procédé permet d'obtenir un panneau présentant une bonne rigidité, apportée par la couche de structure, et un aspect avantageux apporté par le grainage de la couche de revêtement.

Cependant, un tel procédé ne peut être appliqué à un revêtement perméable, tel qu'un non-tissé, qui ne peut être aspiré, ou poussé par un gaz sous pression, contre la face pourvue d'un grainage.

Le document US-5 908 524 propose dans ce cas de pourvoir le revêtement perméable par nature d'une sous-couche étanche permettant de l'étanchéifier. Le Document US 2011/287124 divulgue un procédé de réalisation d'un panneau de protection acoustique destiné à recouvrir un moteur de véhicule automobile, ledit procédé comprenant les étapes suivantes : • prévoir un moule de compression à chaud , ledit moule comprenant une matrice et un poinçon définissant une cavité de moulage rendue étanche par fermeture dudit moule, ledit poinçon ou ladite matrice présentant une face pourvue d'un grainage, • disposer entre ladite matrice et ledit poinçon, en empilement successif, une couche de revêtement • appliquer du côté dudit film un gaz sous pression de manière à plaquer ledit film contre ladite couche de structure afin de la comprimer et de manière à plaquer ladite couche de revêtement contre ladite face afin de lui conférer un grainage.

Cependant, que l'on soit dans le cas d'un revêtement étanche par nature ou bien rendu étanche par adjonction d'une sous-couche étanche, on dispose en définitive d'un panneau ne permettant pas de faire de l'absorption acoustique du côté de la couche de revêtement, les ondes acoustiques ne pouvant être absorbées au sein de la couche de structure du fait de la barrière réalisée par ladite couche de revêtement.

Or, il peut être souhaité de disposer d'un grainage sur un revêtement perméable lorsque l'on veut réaliser un panneau pouvant réaliser de l'absorption acoustique du côté de la couche de revêtement.

Pour y remédier, il a été proposé de réaliser un grainage préalable sur le revêtement perméable, le grainage étant notamment formé par un fil tricoté dans le cas d'un revêtement de type non-tissé.

Dans ce cas, on observe généralement une atténuation - voire une disparition - du grainage, ceci du fait de l'écrasement de la couche de revêtement contre le moule, une telle atténuation - ou disparition - étant accentuée dans les zones de fort étirement de ladite couche.

Dans certains cas, on peut minimiser ce phénomène en utilisant une couche de revêtement de masse surfacique importante.

Dans le cas d'un revêtement à base de non-tissé, on peut par exemple prévoir une masse surfacique de l'ordre de 220 g/m².

Mais, même avec un tel revêtement de forte masse surfacique, on n'a pas toujours un aspect satisfaisant dans les zones de fort étirement.

Et, en tout état de cause, la couche de revêtement présente une certaine complexité de réalisation, du fait de son grainage préalable, et requiert l'emploi d'une quantité importante de matière première, ce qui rejaillit de façon importante sur son coût, et donc sur celui du panneau.

L'invention a pour but de proposer un procédé permettant d'obtenir à moindre coût un panneau présentant un revêtement perméable pourvu d'un grainage d'aspect satisfaisant dans toutes les zones dudit revêtement, et en particulier dans les zones correspondant à un fort étirement, ledit panneau permettant en outre une absorption acoustique du côté dudit revêtement.

A cet effet, et selon un premier aspect, l'invention propose un procédé de réalisation d'un panneau d'habillage et de protection acoustique pour véhicule automobile, ledit procédé comprenant les étapes suivantes :
- prévoir un moule de compression à chaud, ledit moule comprenant une matrice et un poinçon définissant une cavité de moulage rendue étanche par fermeture dudit moule, ledit poinçon ou ladite matrice présentant une face pourvue d'un grainage,
- disposer entre ladite matrice et ledit poinçon, en empilement successif, une couche de revêtement perméable, une couche perméable de structure et d'absorption acoustique apte à être moulée par compression à chaud, ladite couche de structure étant à base de fibres liées entre elles par un liant, et un film thermoplastique étanche, ladite couche de revêtement étant tournée vers ladite face, lesdites couches étant à température permettant leur moulage,
- fermer ledit moule de manière à étanchéifier ladite cavité,
- appliquer du côté dudit film un gaz sous pression de manière à plaquer ledit film contre ladite couche de structure afin de la comprimer et de manière à plaquer ladite couche de revêtement contre ladite face afin de lui conférer un grainage,
- après découpe périphérique, démouler le panneau obtenu.

Le fait d'appliquer du côté du film un gaz sous pression, en lieu et place d'une aspiration sous vide qui aurait pu être réalisée du côté de la couche de revêtement, présente notamment les avantages suivants :
- en cas d'aspiration, on est obligé d'avoir un fonctionnement continu de la pompe d'aspiration pour réaliser le grainage et la compression de la couche de structure, ce qui n'est pas le cas lorsque l'on applique un gaz sous pression, ceci dans la mesure où la cavité de moulage est rendue étanche par fermeture du moule,
- en outre, le fait de travailler en aspiration conduit à un risque d'encrassement du système d'aspiration, de par la présence de liant dans la couche de structure, inconvénient qui est évité lorsque le gaz est mis sous pression,
- enfin, la demanderesse a observé que l'application d'un gaz sous pression permet de réaliser, contrairement à une aspiration qui réalise un placage moins puissant de la couche de revêtement, un grainage très accentué du revêtement ; le grainage du revêtement étant sous la forme d'une pluralité de saillies contigües définissant des grains, la hauteur desdites saillies peut notamment être supérieure ou égale à 0,4 mm.

On précise ici que le fait que les couches soient à température permettant leur moulage signifie qu'elles sont portées à ladite température soit avant soit après leur mise en place dans le moule, selon qu'on utilise un moule froid ou chaud.

Avec l'agencement proposé, le grainage du revêtement est conféré par la face du moule pourvue d'un grainage, et non par un grainage conféré au préalable sur ledit revêtement.

On garantit ainsi la présence d'un grainage homogène et parfaitement marqué sur la couche de revêtement, et ceci dans toutes les zones, y compris celles de fort étirement du revêtement.

En outre, on peut à loisir prévoir d'utiliser des revêtements de faible masse surfacique, ce qui permet, en combinaison avec l'absence d'opération de grainage préalable du revêtement, de réduire le coût du panneau.

On observe ici que le film étanche a une triple fonction :
- d'une part de comprimer la couche de structure,
- d'autre part de plaquer la couche de revêtement contre la face pourvue d'un grainage, de manière à transférer ledit grainage sur ladite couche de revêtement,
- et enfin, de conférer au panneau des propriétés d'isolation acoustique sur la face de la couche de structure opposée à celle comportant le revêtement, ledit panneau présentant par ailleurs des propriétés d'absorption acoustique du côté dudit revêtement.

On précise enfin que le fait d'utiliser un film pour réaliser la compression de la couche de structure et le placage de la couche de revêtement, en lieu et place d'un simple écrasement entre la matrice et le poinçon du moule, permet de préserver aisément dans ladite couche de structure au moins une zone faiblement comprimée permettant de réaliser de l'absorption acoustique.

Selon un deuxième aspect, l'invention propose un panneau réalisé par un tel procédé.

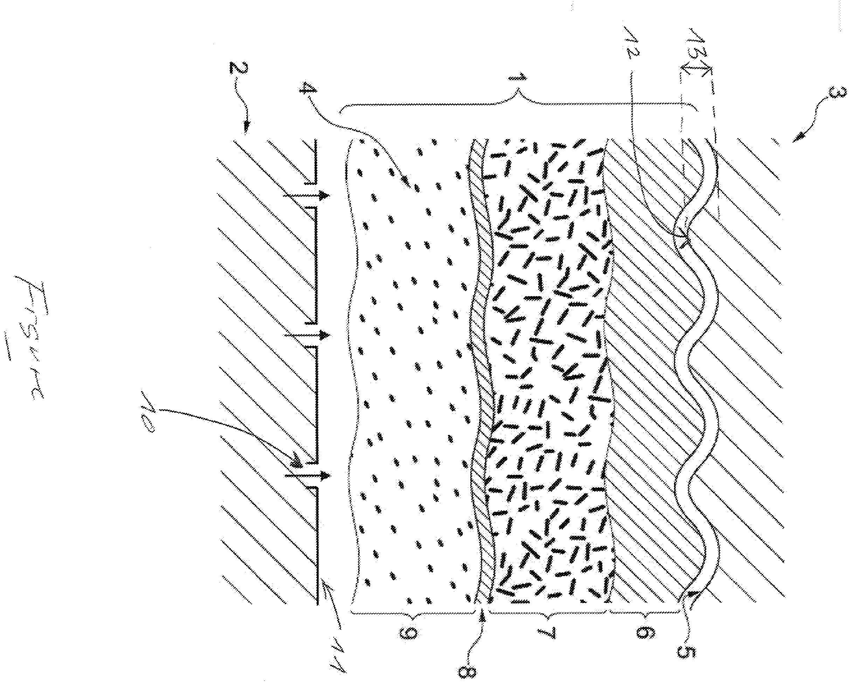

D'autres particularités et avantages de l'invention apparaîtront dans la description qui suit, faite en référence à la figure jointe qui est une vue schématique en coupe partielle d'un panneau en cours de moulage.

En référence à la figure, on décrit un procédé de réalisation d'un panneau 1 d'habillage et de protection acoustique pour véhicule automobile, ledit procédé comprenant les étapes suivantes :
- prévoir un moule de compression à chaud, ledit moule comprenant une matrice 2 et un poinçon 3 définissant une cavité 4 de moulage rendue étanche par fermeture dudit moule, ledit poinçon ou ladite matrice présentant une face 5 pourvue d'un grainage,
- disposer entre ladite matrice et ledit poinçon, en empilement successif, une couche de revêtement 6 perméable, une couche perméable de structure et d'absorption acoustique 7 apte à être moulée par compression à chaud, ladite couche de structure étant à base de fibres liées entre elles par un liant, et un film 8 thermoplastique étanche, ladite couche de revêtement étant tournée vers ladite face, lesdites couches étant à température permettant leur moulage,
- fermer ledit moule de manière à étanchéifier ladite cavité,
- appliquer du côté dudit film un gaz sous pression de manière à plaquer ledit film contre ladite couche de structure afin de la comprimer et de manière à plaquer ladite couche de revêtement contre ladite face afin de lui conférer un grainage,
- après découpe périphérique, démouler le panneau 1 obtenu.

Un tel panneau 1 est notamment destiné à recouvrir un moteur, une paroi d'habitacle, un compartiment à bagages ou encore une paroi d'un tel compartiment.

Dans la réalisation représentée, la mise du gaz sous pression se fait par l'intermédiaire d'orifices 10 disposés sur la face opposée 11 à la face 5 pourvue d'un grainage.

Les couches de revêtement 6 et de structure 7 présentent notamment, avant thermocompression, une résistance au passage de l'air inférieure à 2500 N.s.m⁻³.

Comme précisé plus haut, le fait que les couches 6,7 soient à température permettant leur moulage signifie qu'elles sont portées à ladite température soit avant soit après leur mise en place dans le moule, selon qu'on utilise un moule froid ou chaud.

Selon une réalisation, la découpe périphérique peut être réalisée, de façon non représentée, par des lames intégrées au moule, lesdites lames permettant de réaliser par ailleurs l'étanchéité de la cavité 4 de moulage.

Selon la réalisation représentée, le grainage de la face 5 se présente sous la forme d'une pluralité de saillies 12 contigües définissant des grains, la hauteur 13 desdites saillies étant notamment supérieure ou égale à 0,5 mm.

Selon une réalisation, la hauteur 13 des saillies 12 est inférieure ou égale à 3 mm.

Selon une réalisation, la couche de revêtement 6 est à base de non-tissé - par exemple de type aiguilleté, lié au jet d'eau ou encore collé - ou de tissu.

Selon une réalisation, la couche de revêtement 6 est à base de fibres synthétiques, notamment à base de polyéthylène téréphtalate.

Selon une réalisation, la couche de revêtement 6 présente une masse surfacique inférieure ou égale à 80 g/m², étant notamment inférieure ou égale à 40 g/m².

Selon une réalisation, la couche de structure 7 présente une masse surfacique comprise entre 400 et 1200 g/m².

Selon une réalisation, la couche de structure 7 présente après moulage une épaisseur comprise entre 2 et 3 mm.

Selon une réalisation, la couche de structure 7 est à base de fibres minérales, notamment de fibres de verre, ou de fibres naturelles, notamment de coton.

Selon une réalisation, le liant est de nature thermodurcissable, étant notamment une résine phénolique ou époxy, ou de nature thermoplastique, étant notamment un polypropylène.

Selon une réalisation, dans le cas d'un liant de nature thermodurcissable, les couches 6,7 et le film 8 sont chauffés par le moule qui est maintenu notamment à une température de l'ordre de 200°C.

Selon une réalisation, le film 8 est un multicouches polyéthylène / polyamide / polyéthylène, les couches de polyéthylène formant une colle fusible à la température de moulage.

Selon une réalisation, le film 8 présente une épaisseur comprise entre 70 et 90 microns.

Selon la réalisation représentée, on dispose en outre sur le film 8, à l'opposé de la couche de structure 7, une couche perméable d'absorption acoustique 9.

On dispose ainsi d'un panneau 1 présentant, de part et d'autre du film 8, deux couches respectives 7,9 qui réalisent de l'absorption acoustique, ledit film réalisant une isolation acoustique entre lesdites couches.

Selon une réalisation, la couche d'absorption 9 est à base de mousse, notamment de polyuréthanne.

Selon une réalisation, la couche d'absorption 9 présente, avant moulage, une densité comprise entre 0,010 et 0,020, étant notamment de l'ordre de 0,015.

On décrit enfin un panneau 1 d'habillage et de protection acoustique pour véhicule automobile, ledit panneau étant réalisé par un procédé tel que décrit ci-dessus, ledit panneau comprenant successivement une couche de revêtement 6 perméable grainé, une couche thermo-comprimée perméable de structure et d'absorption acoustique 7, ladite couche de structure étant à base de fibres liées entre elles par un liant, et un film 8 thermoplastique étanche.

Selon une réalisation, la couche de revêtement 6 présente un grainage sous la forme d'une pluralité de saillies contigües définissant des grains, la hauteur desdites saillies étant notamment supérieure ou égale à 0,4 mm, sachant que le grainage obtenu sur la couche de revêtement 6 peut être un peu amoindri par rapport à celui disposé sur la face 5 pourvue d'un grainage.

Selon une réalisation, la couche de revêtement 6 présente une masse surfacique inférieure ou égale à 80 g/m², étant notamment inférieure ou égale à 40 g/m².

La mise en œuvre d'une couche de revêtement 6 présentant une masse surfacique aussi faible contribue à l'obtention d'un panneau 1 de coût minimisé.

Bien entendu, la couche de revêtement 6 peut présenter une masse surfacique plus importante, par exemple de l'ordre de 100 ou 200 g/m².

Selon la réalisation représentée, le panneau 1 comprend en outre, disposée sur le film 8, à l'opposé de la couche de structure 7, une couche perméable d'absorption acoustique 9, ladite couche d'absorption étant notamment à base de mousse, notamment de polyuréthanne.

## Revendications

1. Procédé de réalisation d'un panneau (1) d'habillage et de protection acoustique pour véhicule automobile, ledit procédé comprenant les étapes suivantes :
- prévoir un moule de compression à chaud, ledit moule comprenant une matrice (2) et un poinçon (3) définissant une cavité (4) de moulage rendue étanche par fermeture dudit moule, ledit poinçon ou ladite matrice présentant une face (5) pourvue d'un grainage,
- disposer entre ladite matrice et ledit poinçon, en empilement successif, une couche de revêtement (6) perméable, une couche perméable de structure et d'absorption acoustique (7) apte à être moulée par compression à chaud, ladite couche de structure étant à base de fibres liées entre elles par un liant, et un film (8) thermoplastique étanche, ladite couche de revêtement étant tournée vers ladite face, lesdites couches étant à température permettant leur moulage,
- fermer ledit moule de manière à étanchéifier ladite cavité,
- appliquer du côté dudit film un gaz sous pression de manière à plaquer ledit film contre ladite couche de structure afin de la comprimer et de manière à plaquer ladite couche de revêtement contre ladite face afin de lui conférer un grainage,
- après découpe périphérique, démouler le panneau (1) obtenu.

2. Procédé selon la revendication 1, **caractérisé en ce que** le grainage de la face (5) se présente sous la forme d'une pluralité de saillies (12) contigües définissant des grains, la hauteur (13) desdites saillies étant supérieure ou égale à 0,5 mm.

3. Procédé selon l'une des revendications 1 ou 2, **caractérisé en ce que** la couche de revêtement (6) est à base de non-tissé ou de tissu.

4. Procédé selon l'une quelconque des revendications 1 à 3, **caractérisé en ce que** la couche de revêtement (6) présente une masse surfacique inférieure ou égale à 80 g/m², étant notamment inférieure ou égale à 40 g/m².

5. Procédé selon l'une quelconque des revendications 1 à 4, **caractérisé en ce qu'**on dispose en outre sur le film (8), à l'opposé de la couche de structure (7), une couche perméable d'absorption acoustique (9).

6. Procédé selon la revendication 5, **caractérisé en ce que** la couche d'absorption (9) est à base de mousse.

7. Procédé selon l'une des revendications 5 ou 6, **caractérisé en ce que** la couche d'absorption (9) présente, avant moulage, une densité comprise entre 0,010 et 0,020, étant notamment de l'ordre de 0,015.

8. Procédé selon l'une quelconque des revendications 1 à 7, **caractérisé en ce que** la couche de structure (7) est à base de fibres minérales ou de fibres naturelles.

9. Procédé selon l'une quelconque des revendications 1 à 8, **caractérisé en ce que** le liant est de nature thermodurcissable ou de nature thermoplastique.

10. Panneau (1) réalisé par un procédé selon l'une quelconque des revendications 1 à 9, ledit panneau comprenant successivement une couche de revêtement (6) perméable grainé, une couche thermo-comprimée perméable de structure et d'absorption acoustique (7), ladite couche de structure étant à base de fibres liées entre elles par un liant, et un film (8) thermoplastique étanche,

## Patentansprüche

1. Verfahren zur Herstellung einer Verkleidungs- und Schallschutztafel (1) für ein Kraftfahrzeug, wobei das Verfahren die folgenden Schritte umfasst:
- Vorsehen einer Heißpressform, wobei die Form eine Matrize (2) und ein Stanzeisen (3) umfasst, die einen Formhohlraum (4) definieren, der durch Schließen der Form abgedichtet wird, wobei das Stanzeisen oder die Matrize eine Seite (5) aufweisen, die mit einer Körnung versehen ist,
- Anordnen, zwischen der Matrize und dem Stanzeisen, in einer aufeinanderfolgenden Aufschichtung, einer durchlässigen Beschichtungsschicht (6), einer durchlässigen Struktur- und Schallabsorptionsschicht (7), die imstande ist, durch Heißpressen geformt zu werden, wobei die Strukturschicht auf Basis von durch ein Bindemittel aneinander gebundener Fasern ist, und eines dichten, thermoplastischen Films (8), wobei die Beschichtungsschicht zu der Seite gekehrt ist, wobei die Schichten auf einer Temperatur sind, die deren Formung ermöglicht,
- Schließen der Form, um den Hohlraum abzudichten,
- Anwenden, auf Seiten des Films, eines unter Druck stehenden Gases, um den Film an die Strukturschicht anzupressen, um sie zu komprimieren, und um die Beschichtungsschicht an die Seite anzupressen, um ihr eine Körnung zu verleihen,
- nach einem Umfangsschnitt, die erhaltenen Tafel (1) aus der Form nehmen.

2. Verfahren nach Anspruch 1, **dadurch gekennzeichnet, dass** sich die Körnung der Seite (5) in Form einer Vielzahl von aneinander angrenzenden Vorsprüngen (12) präsentiert, die Körner definieren, wobei die Höhe (13) der Vorsprünge größer oder gleich 0,5 mm ist.

3. Verfahren nach einem der Ansprüche 1 oder 2, **dadurch gekennzeichnet, dass** die Beschichtungsschicht (6) auf Basis eines Vlieses oder Gewebes ist.

4. Verfahren nach einem der Ansprüche 1 bis 3, **dadurch gekennzeichnet, dass** die Beschichtungsschicht (6) ein Flächengewicht kleiner oder gleich 80 g/m² aufweist, wobei sie insbesondere kleiner oder gleich 40 g/m² ist.

5. Verfahren nach einem der Ansprüche 1 bis 4, **dadurch gekennzeichnet, dass** weiter auf dem Film (8) gegenüber der Strukturschicht (7) eine durchlässige Schallabsorptionsschicht (9) angeordnet wird.

6. Verfahren nach Anspruch 5, **dadurch gekennzeichnet, dass** die Absorptionsschicht (9) auf Schaumstoffbasis ist.

7. Verfahren nach einem der Ansprüche 5 oder 6, **dadurch gekennzeichnet, dass** die Absorptionsschicht (9) vor dem Formen eine Dichte aufweist, die zwischen 0,010 und 0,020 enthalten ist, insbesondere in der Größenordnung von 0,015 ist.

8. Verfahren nach einem der Ansprüche 1 bis 7, **dadurch gekennzeichnet, dass** die Strukturschicht (7) auf Basis von Mineralfasern oder Naturfasern ist.

9. Verfahren nach einem der Ansprüche 1 bis 8, **dadurch gekennzeichnet, dass** das Bindemittel in wärmehärtbarer Art oder von thermoplastischer Art ist.

10. Tafel (1), die durch ein Verfahren nach einem der Ansprüche 1 bis 9 hergestellt wird, wobei die Tafel aufeinanderfolgend eine gekörnte durchlässige Beschichtungsschicht (6), eine durchlässige wärmekomprimierte Schallabsorptionsschicht (7) umfasst, wobei die Strukturschicht auf Basis von durch ein Bindemittel aneinander gebundener Fasern und einem dichten, thermoplastischen Film (8) ist.

## Claims

1. Method for producing a trim and sound protection panel (1) for a motor vehicle, said method comprising the following steps:
- providing a hot-compression mould, said mould comprising a die (2) and a punch (3) defining a moulding cavity (4) sealed by closing said mould, said punch or said die having a face (5) provided with graining,
- disposing, between said die and said punch, in successive stacking, a permeable covering layer (6), a permeable structural and sound-absorption layer (7) able to be moulded by hot compression, said structural layer being based on fibres bonded together by a binder, and an impermeable thermoplastic film (8),
said covering layer being turned towards said face, said layers being at a temperature allowing moulding thereof,
- closing said mould so as to seal said cavity,
- applying on the same side as said film a pressurised gas so as to press said film against said structural layer in order to compress it and so as to press said covering layer against said face in order to confer graining on it,
- after peripheral cutting, removing the panel (1) obtained from the mould.

2. Method according claim 1, **characterised in that** the graining of the face (5) is in the form of a plurality of contiguous projections (12) defining grains, the height (13) of said grains being greater than or equal to 0.5 mm.

3. Method according to either claim 1 or claim 2, **characterised in that** the covering layer (6) is based on a non-woven material or woven material.

4. Method according to any of claims 1 to 3, **characterised in that** the covering layer (6) has a surface density of less than or equal to 80 g/m², being in particular less than or equal to 40 g/m².

5. Method according to any of claims 1 to 4, **characterised in that** a permeable sound absorption layer (9) is also disposed on the film (8), opposite to the structural layer (7) .

6. Method according claim 5, **characterised in that** the absorption layer (9) is based on foam.

7. Method according to either claim 5 or claim 6, **characterised in that** the absorption layer (9) has, before moulding, a density of between 0.010 and 0.020, being in particular around 0.015.

8. Method according to any of claims 1 to 7, **characterised in that** the structural layer (7) is based on mineral fibres or natural fibres.

9. Method according to any of claims 1 to 8, **characterised in that** the binder is thermosetting in nature or thermoplastic in nature.

10. Panel (1) produced by a method according to any of claims 1 to 9, said panel comprising successively a grained permeable covering layer (6), a permeable thermocompressed structural and sound absorption layer (7), said structural layer being based on fibres bonded together by a binder, and an impermeable thermoplastic film (8).
